# EUROPEAN PATENT APPLICATION

(11) **EP 4 803 557 A1**
(43) Date of publication of application: **09.09.2026**
(21) Application number: 26163237.6
(22) Date of filing: 09.03.2026
(51) Int. Cl.: C08F 214/22, C09D 127/16, H01M 4/13, H01M 4/62, H01M 10/0525, H01M 10/42

(54) **INSULATING COMPOSITION FOR RECHARGEABLE LITHIUM BATTERY, ELECTRODE, AND RECHARGEABLE LITHIUM BATTERY MANUFACTURED USING SAME**

(30) Priority: 07.03.2025 KR 20250030085
(71) Applicant: SAMSUNG SDI CO., LTD., Yongin-si, Gyeonggi-do 17084 (KR)
(72) Inventor: Hong, Minyoung, 17084 Yongin-si, Gyeonggi-do (KR); Han, Seunghun, 17084 Yongin-si, Gyeonggi-do (KR); Choi, Kyubuem, 17084 Yongin-si, Gyeonggi-do (KR); Jung, Jiyoon, 17084 Yongin-si, Gyeonggi-do (KR); Park, Minsu, 17084 Yongin-si, Gyeonggi-do (KR)
(74) Representative: Michalski Hüttermann & Partner mbB

(57) **Abstract**

Provided are an insulating composition for a rechargeable lithium battery, an electrode manufactured using the insulating composition, and a rechargeable lithium battery The insulating composition for the rechargeable lithium battery includes a non-aqueous binder, inorganic particles, and a solvent. The non-aqueous binder includes a copolymer of a vinylidene fluoride-based monomer and at least one comonomer different from the vinylidene fluoride-based monomer.

## Description

### BACKGROUND

### 1. Field

An insulating composition for a rechargeable lithium battery, an electrode manufactured using the insulating composition, and a rechargeable lithium battery are disclosed.

### 2. Description of the Related Art

A rechargeable lithium battery may be recharged and has three or more times as high an energy density per unit weight as a conventional lead storage battery, nickel-cadmium battery, nickel hydrogen battery, nickel zinc battery and the like. A rechargeable lithium battery may be also charged at a high rate, and thus is commercially manufactured for a laptop, a cell phone, an electric tool, an electric bike, and the like. Improving on additional energy density may be advantageous.

A rechargeable lithium battery is manufactured by injecting an electrolyte solution into an electrode assembly, which includes a positive electrode including a positive electrode active material capable of intercalating/deintercalating lithium ions, and a negative electrode including a negative electrode active material capable of intercalating/deintercalating lithium ions.

In general, a width of the negative electrode is wider than the width of the positive electrode, and a separator is interposed between the positive electrode and the negative electrode. Herein, a burr formed at the edge of the positive electrode coated region may come into contact with the negative electrode, and a short may occur between the positive electrode and the negative electrode, or an OCV (open-circuit voltage) drop may occur.

In order to address this issue, a method of coating the positive electrode uncoated region using an insulating composition including inorganic particles is typically known. As binders that adhere the above-mentioned inorganic particles to the positive electrode uncoated region while also adhering different inorganic particles, polyvinylidene fluoride (PVdF) as a non-aqueous binder, and a styrene-butadiene rubber (SBR), as an aqueous binder are known.

However, the PVdF binder loses adhesive strength as the PVdF binder absorbs the electrolyte solution inside the rechargeable lithium battery and swells after being coated on the positive electrode uncoated region, and the SBR binder suddenly drops the viscosity thereof during the coating process, although the SBR binder has good adhesive strength after coating.

### SUMMARY

Some example embodiments include an insulating composition for a rechargeable lithium battery that improves coating processability and insulating layer properties while complementing shortcomings of a non-aqueous binder.

Some example embodiments include an insulating composition for a rechargeable lithium battery, the insulating composition including a non-aqueous binder; inorganic particles, and a solvent, wherein the non-aqueous binder includes a copolymer of a vinylidene fluoride-based monomer and at least one comonomer different from the vinylidene fluoride-based monomer.

Some example embodiments include an electrode for a rechargeable lithium battery manufactured using an insulating composition according to the aforementioned example embodiments.

Some example embodiments include a rechargeable lithium battery, wherein at least one of the positive electrode and the negative electrode is an electrode according to the aforementioned example embodiments.

The insulating composition for a rechargeable lithium battery according to the above example embodiment may further improve coating processability and insulating layer properties while complementing shortcomings of a non-aqueous binder.

Accordingly, an electrode and a rechargeable lithium battery manufactured using the insulating composition for the rechargeable lithium battery according to the aforementioned example embodiments may exhibit desired or improved cycle-life characteristics.

### BRIEF DESCRIPTION OF THE DRAWINGS

FIG. 1 is a schematic view illustrating an electrode for a rechargeable lithium battery, according to some example embodiments.
FIG. 2 to FIG. 5 are schematic views illustrating rechargeable lithium batteries according to some example embodiments.

### DETAILED DESCRIPTION

Hereinafter, example embodiments are described in detail. However, these embodiments are examples, the present disclosure is not limited thereto, and the present disclosure is defined by the scope of claims.

As used herein, when a specific definition is not otherwise provided, it is understood that when an element such as a layer, film, region, or substrate is referred to as being "on" another element, the element can be directly on the other element, or intervening elements may also be present therebetween.

As used herein, when a specific definition is not otherwise provided, the singular may also include the plural. In addition, unless otherwise specified, "A or B" may indicate "including A, including B, or including A and B."

As used herein, "combination thereof" may indicate a mixture, a stack, a composite, a copolymer, an alloy, a blend, or a reaction product of constituents.

As used herein, when a definition is not otherwise provided, a particle diameter may be an average particle diameter. In addition, the particle diameter may refer to an average particle diameter (D50), which indicates the diameter of particles having a cumulative volume of 50 volume% in the particle size distribution. The average particle diameter (D50) may be measured by a method known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter (D50) value may be readily obtained through a calculation. Alternatively, the average particle diameter (D50) value can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of ≥ 28 kHz with an output of 60 W are irradiated to calculate an average particle diameter (D50) on the basis of 50% of the particle diameter distribution in the measuring device.

As used herein, the "average particle size" of the binder indicates a volume average particle size, and refers to a Z-average particle size measured using a dynamic light scattering analysis device.

As used herein, when a specific definition is not otherwise provided, "substituted" refers to replacement of at least one hydrogen atom of a compound by a substituent such as or including at least one of a halogen atom (F, CI, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, when a specific definition is not otherwise provided, "heterocycloalkyl group," "heterocycloalkenyl group," "heterocycloalkynyl group," and "heterocycloalkylene group" indicates that at least one heteroatom of N, O, S or P is present in the ring compound of cycloalkyl, cycloalkenyl, cycloalkynyl, and cycloalkylene, respectively.

As used herein, when a specific definition is not otherwise provided, "(meth)acrylate" refers to both "acrylate" and "methacrylate".

As used herein, when a definition is not otherwise provided, the term "combination" refers to mixing or copolymerization. In addition, "copolymerization" refers to block copolymerization to random copolymerization and "copolymer" refers to a block copolymer to a random copolymer.

As used herein, when a definition is not otherwise provided, in the chemical formulae, hydrogen is bonded at the position when a chemical bond is not drawn.

Additionally, unless otherwise defined herein, "*" refers to a portion connected to the same or different atoms or chemical formulas.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Insulating Composition for Rechargeable Lithium Battery

Some example embodiments include an insulating composition for a rechargeable lithium battery, the insulating composition including a non-aqueous binder, inorganic particles, and a solvent. The non-aqueous binder includes a copolymer of a vinylidene fluoride-based monomer and at least one comonomer.

The insulating composition for the rechargeable lithium battery according to some example embodiments may further improve coating processability and insulating layer properties while complementing the shortcomings of the non-aqueous binder.

Hereinafter, an insulating composition for a rechargeable lithium battery according to the aforementioned example embodiments is described in detail.

### Non-aqueous Binder:

The non-aqueous binder commonly used in insulating compositions in the art is polyvinylidene fluoride. As described above, the adhesive strength of the polyvinylidene fluoride binder is lost as the electrolyte solution is absorbed and swelling occurs within the rechargeable lithium battery after being coated on the positive or negative electrode uncoated region.

In contrast, the insulating composition for a rechargeable lithium battery according to some example embodiments includes a non-aqueous binder including a copolymer of a vinylidene fluoride-based monomer and at least one comonomer.

As the 'copolymer of a vinylidene fluoride-based monomer and at least one comonomer' is used as the non-aqueous binder, compared to a case of using the 'PVdF (polyvinylidene fluoride) homopolymer' itself, coating processability may not only be improved by reducing or suppressing viscosity of a slurry from sharply dropping, but also physical properties of an electrode manufactured by using the 'copolymer of a vinylidene fluoride-based monomer and at least one comonomer' may be improved by increasing adhesive strength, reducing a swelling rate, reducing or suppressing a curling shape, and the like.

### Vinylidene Fluoride-based Monomer

The vinylidene fluoride-based monomer may be represented by Chemical Formula 1:

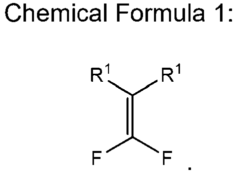

In Chemical Formula 1, R¹ is the same or different and is or includes H, or a substituted or unsubstituted C1 to C30 alkyl group.

For example, Chemical Formula 1 may be or include vinylidene fluoride represented by Chemical Formula 1-1:

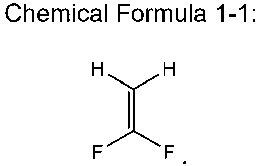

### Comonomer

The properties of the 'copolymer of vinylidene fluoride-based monomer and at least one comonomer' may be controlled depending on the type of the comonomer and the copolymerization ratio thereof.

The comonomer may include a functional group represented by Chemical Formula 2, a compound, or a combination thereof:

Chemical Formula 2: *-L¹-COOH.

In Chemical Formula 2, L¹ is a single bond, or a substituted or unsubstituted C1 to C10 alkylene.

For example, the comonomer may include a carboxyl group represented by at least one of Chemical Formula 2-1, (meth)acrylic acid represented by Chemical Formula 2-2, or a combination thereof: wherein (meth)acrylic acid is a compound including acrylic acid and methacrylic acid:

Chemical Formula 2-1: *-COOH.

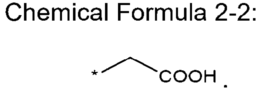

### Copolymer

The copolymer may be or include at least one of poly(vinylidene fluoride-co-carboxylic acid) (P(VDF-co-CA)), poly(vinylidene fluoride-co-acrylic acid) (P(VDF-co-AA), or a combination thereof.

In the copolymer, the weight ratio of the polyvinylidene fluoride monomer and the comonomer may be in a range of ≥ 80:20 to ≤ 99.9:0.1, or ≥ 90:10 to ≤ 99.5:0.5. Within the above range, suspension polymerization may occur.

A weight average molecular weight of the copolymer measured by the GPC method may be in a range of ≥ 1,000,000 g/mol to ≤ 1,600,000 g/mol, or ≥ 1,200,000 g/mol to ≤ 1,400,000 g/mol. By increasing the molecular weight compared to PVdF homopolymer, the peeling strength may be strengthened.

A Z-average particle diameter of the copolymer may be in a range of ≥ 100 µm to ≤ 400 µm.

### Aqueous Binder:

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluororubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

For example, the aqueous binder may be or include a styrene-butadiene rubber, and optionally a styrene-butadiene rubber substituted by an organic solvent (e.g., NMP).

By using the aqueous binder mixed with the non-aqueous binder, the physical properties of the final manufactured electrode may be improved, such as improved adhesive strength, reduced swelling rate, and reduction or suppression of curling shape, compared to using the non-aqueous binder alone.

A weight ratio of the non-aqueous binder and the aqueous binder may be in a range of ≥ 90:10 to ≤ 60:40, or ≥ 80:20 to ≤ 70:30, and within the above range, a synergistic effect may be realized by mixed use of the non-aqueous binder and the aqueous binder.

### Inorganic Particles:

The inorganic particles may be or include at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but are not limited thereto.

An average particle diameter (D50) of the inorganic particles may be in a range of ≥ 1 µm to ≤ 2.5 µm, but is not limited thereto.

### Solvent:

The solvent may be or include at least one of NMP, NEP, DMAc, DMF, and a combination thereof, but is not limited thereto.

### Composition Mixing:

Based on the total amount of 100 wt% of the composition for the insulating layer, the binder may be included in an amount in a range of ≥ 4 wt% to ≤ 10 wt%; the inorganic particles may be included in an amount in a range of ≥ 5 wt% to ≤ 20 wt%; and the solvent may be included in an amount in a range of ≥ 60 wt% to ≤ 90 wt%.

A weight ratio of the binder ratio the inorganic particles may be in a range of ≥ 90:10 to ≤ 60:40, or ≥ 80:20 to ≤ 70:30.

When the above ranges are satisfied, the adhesive strength by the binder and insulation properties by the inorganic particles may be harmonized, and the inorganic particles may be dispersed as desired in the solvent.

### Additive:

The composition for the insulating layer may optionally further include an additive, and the additive may include a dispersant.

For example, based on 100 parts by weight of the total amount of the insulating composition, the additive may be added in an amount that is ≤ 1 part by weight.

### Composition Properties:

The desired or improved physical properties exhibited by the composition for the insulating layer are as follows.

The insulating composition may have a viscosity in a range of ≥ 500 mPa·s to ≤ 2,500 mPa·s, for example, ≥ 1,000 mPa·s to ≤ 2,000 mPa·s, at a shear rate of ≥ 10 s⁻¹ and at a temperature of ≥ 25 °C.

The insulating composition may have a Thixotropy Index (T.I) value, which is a value obtained by dividing a viscosity at a shear rate of 1 s⁻¹ at 25 °C by a viscosity at a shear rate of 10 s⁻¹ and then taking the logarithm, of ≤ 0.5, for example, ≤ 0.2.

### Electrode:

The electrode according to some example embodiments includes an electrode active material layer, an electrode current collector including a coated region where the electrode active material layer is disposed, and an uncoated region where the electrode active material layer is not disposed, and an insulating layer configured to coat at least a portion of the uncoated region.

The insulating layer includes a non-aqueous binder, and inorganic particles, wherein the non-aqueous binder includes a copolymer of a vinylidene fluoride-based monomer and at least one comonomer different from the vinylidene fluoride-based monomer.

When at least a portion of the uncoated region is coated using the insulating composition for the rechargeable lithium battery according to the aforementioned example embodiments, the solvent is removed, and an insulating layer including the binder and the inorganic particles may be formed.

Accordingly, with respect to the electrode for a rechargeable lithium battery according to the aforementioned example embodiments, the same description may be applied, with a difference for the 'solvent' in the aforementioned example embodiments.

Hereinafter, an electrode for a rechargeable lithium battery according to the aforementioned example embodiments is described in detail, excluding any description overlapping with the aforementioned descriptions.

### Structure of Insulating Layer

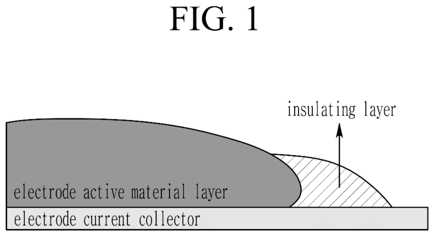

FIG. 1 is a schematic view illustrating an electrode for a rechargeable lithium battery according to the aforementioned example embodiments.

The insulating layer may simultaneously or contemporaneously cover a burr formed at the edge of the electrode active material layer and a portion of the uncoated region, as illustrated in FIG. 1.

By forming an insulating layer with this structure, it is possible to effectively hinder or prevent burrs formed at the edge of the electrode uncoated region from coming into contact with other electrodes. The electrode may be either a positive electrode or a negative electrode. For example, a rechargeable lithium battery including a positive electrode to which the insulating layer is applied, and a negative electrode to which the insulating layer is applied, may be manufactured.

### Thickness of Insulating Layer

The thickness of the insulating layer may be thicker than the thickness of the burr formed at the edge of the electrode coated region.

For example, the thickness of the insulating layer may be in a range of ≥ 5 µm to ≤ 50 µm. Within this range, the burr formed at the edge of the electrode coated region may be effectively hindered or prevented from contacting the opposed electrode.

### Physical Properties of Electrode including Insulating Layer

The desired or improved physical properties exhibited by the insulating layer are as follows.

The crosslinking density, expressed as a weight ratio of the crosslinked polymer based on 100 wt% of a total weight of the insulating layer, may be ≥ 10%, for example, ≥ 20%.

Based on a total area 100 area% of the insulating layer, an area from which the insulating layer is detached, after 24 hours of immersing the electrode in the electrolyte solution, may be ≤ 10 area%, for example, 0 area%.

Based on a total length 100 length% of the insulating layer, after immersing the electrode in the electrolyte solution and at room temperature for 24 hours, a change in length of the insulating layer may be ≤ 5 length%, for example, 0 length%.

The aforementioned electrolyte solution may be a mixture of ≥ 1.5 M lithium salt (LiPF₆) in a carbonate solvent in which ethylene carbonate (EC): ethyl methyl carbonate (EMC): dimethyl carbonate (DMC) are mixed in a volume ratio of ≥ 20:40:40.

### Rechargeable Lithium Battery:

The rechargeable lithium battery according to some example embodiments includes a positive electrode, a negative electrode, a separator between the positive electrode and the negative electrode, and an electrolyte solution, wherein at least one of the positive electrode and the negative electrode is the electrode according to aforementioned example embodiments.

This indicates that an electrode and a rechargeable lithium battery manufactured using the insulating composition for the rechargeable lithium battery according to the aforementioned example embodiments may exhibit desired or improved cycle-life characteristics.

Hereinafter, a rechargeable lithium battery of some example embodiments is described in detail, excluding duplicate descriptions.

### Positive Electrode Active Material

The positive electrode active material may be or include a compound (lithiated intercalation compound) capable of intercalating and deintercalating lithium. For example, one or more types of composite oxides of lithium, and a metal such as or including at least one of cobalt, manganese, nickel, and combinations thereof, may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: Liₐ₁Niₓ₁M¹_{y1}M²_{z1}O_{2-b1}X_{b1}.

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2},

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3},

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4},

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to ≤ 80 mol%, greater than or equal to ≤ 85 mol%, greater than or equal to ≤ 90 mol%, greater than or equal to ≤ 91 %, or greater than or equal to ≤ 94 mol% and less than or equal to ≤ 99 mol%, based on 100 mol% of metal excluding lithium in the lithium transition metal composite oxide. The high-nickel positive electrode active material may achieve high capacity, and may be applied to high-capacity, high-density rechargeable lithium batteries.

### Positive Electrode

The positive electrode for a rechargeable lithium battery may include a current collector, and a positive electrode active material layer on the current collector. The positive electrode may be manufactured using the insulating composition for the rechargeable lithium battery according to the aforementioned example embodiments.

The positive electrode active material layer may include a positive electrode active material, and may further include a binder and/or a conductive material.

For example, the positive electrode may further include an additive that may constitute a sacrificial positive electrode.

An amount of the positive electrode active material may be in a range of ≥ 90 wt% to ≤ 99.5 wt% based on 100 wt% of the positive electrode active material layer, and the amount of each of, or at least one of, the binder and the conductive material may be in a range of ≥ 0.5 wt% to ≤ 5 wt% based on 100 wt% of the positive electrode active material layer.

The binder improves binding properties of positive electrode active material particles with one another, and with a current collector. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto. For example, it is also possible to apply the non-aqueous binder of the insulating composition as a binder for the positive electrode.

The conductive material is included to provide electrode conductivity, and any electrically conductive material may be used as a conductive material unless the electrically conductive material causes an adverse chemical change. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

### Negative Electrode

A negative electrode for a rechargeable lithium battery includes a current collector, and a negative electrode active material layer on the current collector. The negative electrode active material layer includes a negative electrode active material, and may further include a binder and/or a conductive material. The negative electrode may be manufactured using the insulating composition for the rechargeable lithium battery according to the above-described example embodiment.

For example, the negative electrode active material layer may include 90 wt% to ≤ 99 wt% of the negative electrode active material, 0.5 wt% to ≤ 5 wt% of the binder, and 0.5 wt% to ≤ 5 wt% of the conductive material.

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluororubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder is or includes a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

For example, it is also possible to apply the non-aqueous binder of the insulating composition as a binder for the negative electrode.

The conductive material is included to provide electrode conductivity, and any electrically conductive material may be used as a conductive material unless the electrically conductive material causes an adverse chemical change. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

### Electrolyte Solution

An electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more solvents.

For example, when using a carbonate-based solvent, a cyclic carbonate and a chain carbonate may be mixed, and the cyclic carbonate and the chain carbonate may be mixed in a volume ratio in a range of ≥ 1:1 to ≤ 1:9.

The electrolyte may further include at least one of vinylethyl carbonate, vinylene carbonate, fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent supplies lithium ions in a battery, enables an operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

### Separator

Depending on the type of rechargeable lithium battery, a separator may be present between the positive and negative electrodes. The separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including a polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Rechargeable Lithium Battery

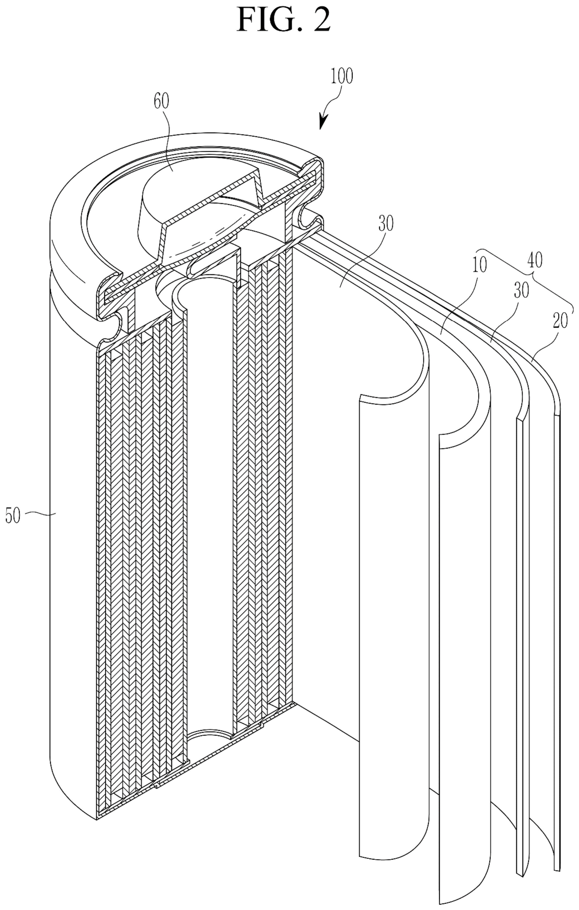

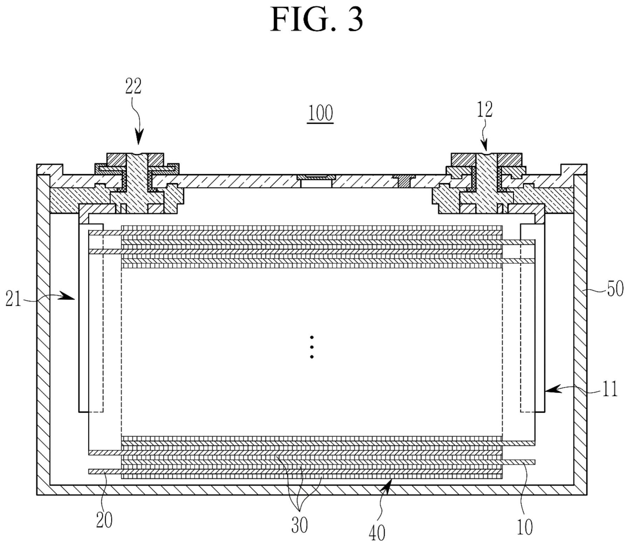

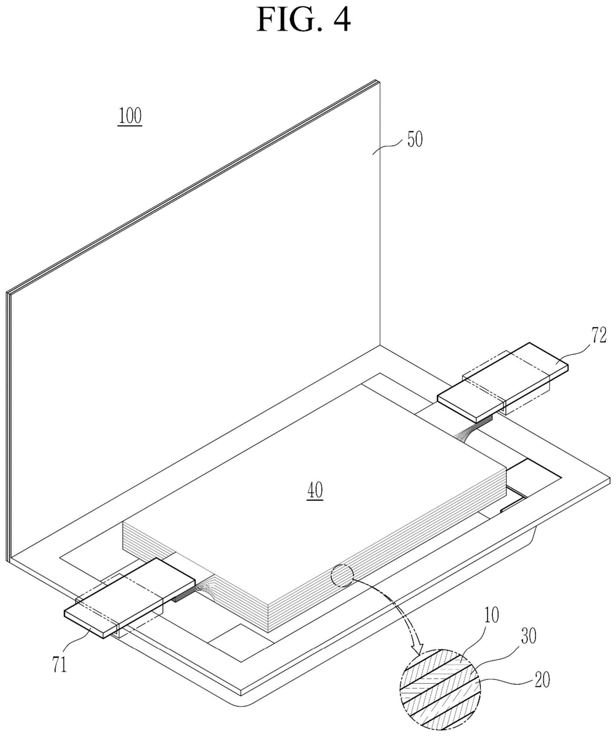

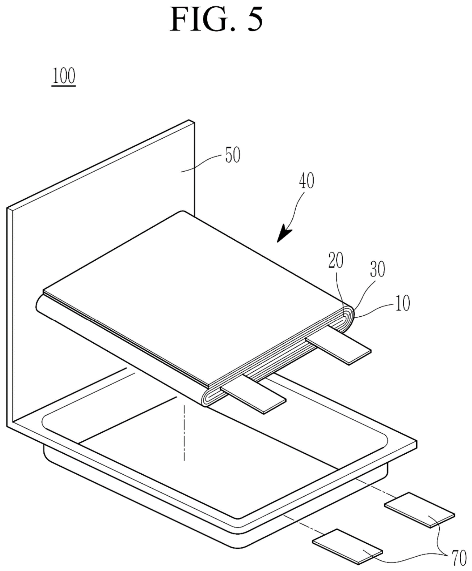

The rechargeable lithium battery may be classified into cylindrical, prismatic, pouch, or coin-type batteries, and the like depending on its shape. FIG. 2 to FIG. 5 are schematic views illustrating the rechargeable lithium battery according to some example embodiments, where FIG. 2 is a cylindrical battery, FIG. 3 is a prismatic battery, and FIG. 4 and FIG. 5 are a pouch-shaped battery. Referring to FIG. 2 to FIG.5, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 2. In FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As illustrated in FIG. 4 and FIG. 5, the rechargeable lithium battery 100 includes an electrode tab 70 illustrated in FIG. 5, or a positive electrode tab 71 and a negative electrode tab 72 illustrated in FIG. 4, the electrode tabs 70/71/72 forming an electric path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

### Example 1

### (1) Preparation of Insulating Composition

As a non-aqueous binder, poly(vinylidene fluoride-co-acrylic acid) (P(VDF-co-AA)) was used.

The poly(vinylidene fluoride-co-acrylic acid) (P(VDF-co-AA)) was a copolymer of vinylidene fluoride and acrylic acid in a weight ratio of 99.5:0.5 and had a weight average molecular weight (Mw) of 1,300,000 g/mol and a Z-average particle diameter of 300 nm.

80 wt% to 90 wt% of the non-aqueous binder, 10 wt% to 20 wt% of boehmite as inorganic particles having an average particle diameter (D50) of 2 µm, and a solvent of NMP were mixed to prepare an insulating composition having a solid content of 10 wt% to 20 wt%.

Herein, a weight ratio of the binder amount to the inorganic particles was 80:20 to 90:10.

### (2) Manufacturing of Positive Electrode

Aluminum foil with a width*width*thickness of 75 mm*68 mm*0.012 mm was used as the positive electrode current collector.

A positive electrode slurry was prepared by mixing LiNi_{0.91}Co_{0.05}Al_{0.04}O₂ as a positive electrode active material, polyvinylidene fluoride (PVDF) as a binder, and carbon as a conductive agent in a weight ratio of 92:4:4, and then dispersing the mixture in N-methyl-2-pyrrolidone. This slurry was coated on the aluminum foil so that the width*width*thickness became 65.8 mm*60 mm*0.078 mm, thereby forming a positive electrode active material layer.

A portion of the positive electrode current collector where the positive electrode active material layer was disposed was called a 'positive electrode coated region,' and the other portion of the positive electrode current collector where the positive electrode active material layer was not disposed was called a 'positive electrode uncoated region.'

The insulating composition was coated on the 'positive electrode uncoated region' with a width of 5 mm to 20 mm and a thickness of 10 µm to 20 µm, and was coated contemporaneously with the positive electrode active material layer, or was post-coated and dried.

### (3) Manufacturing of Negative Electrode

A negative electrode active material slurry was manufactured by mixing artificial graphite and silicon particles in a weight ratio of 93.5:6.5 as a negative electrode active material, and then mixing this negative electrode active material: a styrene-butadiene rubber binder: carboxylmethyl cellulose in a weight ratio of 97:1:2, and dispersing the mixture in distilled water.

The negative electrode active material slurry was coated on a 10 µm-thick Cu foil, and then dried at 100 °C and pressed to form a negative electrode active material layer.

The insulating composition was coated on the 'negative electrode uncoated region' with a width of 5 mm to 20 mm and a thickness of 10 µm to 20 µm, and is coated contemporaneously with the negative electrode active material layer or was post-coated and dried.

### (4) Manufacturing of Rechargeable Lithium Battery Cell

An electrolyte solution was prepared by mixing 1.5 M lithium salt (LiPF₆) with a carbonate solvent including ethylene carbonate (EC): ethyl methyl carbonate (EMC): dimethyl carbonate (DMC) mixed in a volume ratio of 20:40:40.

The manufactured positive and negative electrodes were assembled to obtain an electrode assembly, and then inserted into a prismatic case, and the electrolyte solution was injected thereinto to manufacture a rechargeable lithium battery cell.

### Example 2

An insulating composition, a positive electrode, a negative electrode, and a rechargeable lithium battery cell according to Example 2 were manufactured in the same manner as in Example 1, with a difference that the poly(vinylidene fluoride-co-acrylic acid) (P(VDF-co-AA)) was used as the non-aqueous binder, and the copolymerization weight ratio of vinylidene fluoride and acrylic acid was changed to 99:1.

### Example 3

An insulating composition, a positive electrode, a negative electrode, and a rechargeable lithium battery cell according to Example 3 were manufactured in the same manner as in Example 1, with a difference that poly(vinylidene fluoride-co-acrylic acid) (P(VDF-co-AA)) was used as the non-aqueous binder, and the copolymerization weight ratio of vinylidene fluoride and acrylic acid was changed to 99:5.

### Example 4

An insulating composition, a positive electrode, a negative electrode, and a rechargeable lithium battery cell according to Example 4 were manufactured in the same manner as in Example 1, with a difference that poly(vinylidene fluoride-co-acrylic acid) (P(VDF-co-AA)) was used as the non-aqueous binder, and the copolymerization weight ratio of vinylidene fluoride and acrylic acid was changed to 99:10.

### Comparative Example 1

An insulating composition, a positive electrode, a negative electrode, and a rechargeable lithium battery cell according to Comparative Example 1 were manufactured in the same manner as in Example 1, with a difference that polyvinylidene fluoride (weight average molecular weight (Mw) = 600,000 g/mol, Z-average particle diameter = 108 µm) was used as the non-aqueous binder instead of the poly(vinylidene fluoride-co-acrylic acid) (P(VDF-co-AA)) represented by 3-1-1.

### Comparative Example 2

An insulating composition, a positive electrode, a negative electrode, and a rechargeable lithium battery cell according to Comparative Example 2 were manufactured in the same manner as in Example 1, with a difference that styrene-butadiene rubber (weight average molecular weight (Mw) = 1,000,000 g/mol, Z-average particle diameter =114 µm), an aqueous binder, was used instead of the poly(vinylidene fluoride-co-acrylic acid) (P(VDF-co-AA)) 1 as the non-aqueous binder.

### Evaluation Example 1: Evaluation of Insulating Composition

Each of the insulating compositions according to the examples and the comparative examples was evaluated in the following method, and the results are shown in Tables 1 and 2 below.
(1) Particle size: 0.08 g of the insulating composition was dispersed in 5 mL of NMP dispersion solvent using a particle size analyzer (Malvern Mastersizer 3000), and measured between 1500 and 1700 rpm, and then evaluated according to the following criteria.
   ⊚: If the D50 value is in the range of 1.5 µm to 3 µm and the volume density of the center value of the graph with normal distribution is 8% or more
   ○: If the D50 value deviates from the range of 1.5 µm to 3 µm by being less than 0.5 µm and the volume density of the center value of the graph with normal distribution is less than 8%
   X: If the D50 value deviates from the range of 1.5 µm to 3 µm by being less than 0.5 µm and deviates from the normal distribution and has two or more center values
(2) Viscosity: measured at a shear rate of 10 s⁻¹ at 25 °C by attaching a cone plate PP25 to a viscosity measuring apparatus (Anton Paar, MCR302E) and then, evaluated according to the following criteria.
   ⊚: viscosity in a range of 1000 mPa · s to 2000 mPa · s at a shear rate of 10 s⁻¹
   ○: viscosity of less than or equal to 500 mPa · s at a shear rate of 10 s⁻¹
   △: viscosity deviated by greater than or equal to 500 mPa · s in the range of 1000 mPa · s to 2000 mPa · s at a shear rate of 10 s⁻¹
   X: viscosity was immeasurable
(3) T.I: Thixotropy Index (T.I) was evaluated according to the following criteria by dividing viscosity at a shear rate of 1 s⁻¹ at 25 °C by viscosity at a shear rate of 10 s⁻¹, and then calculating a logarithmic value thereof.
   ⊚ : T.I of less than or equal to 0.2
   ∘ : T.I of 0.2 to 0.5
   △ : T.I of greater than or equal to 0.5
   X: viscosity was immeasurable

### Evaluation Example 2: Evaluation of Positive Electrode

For each positive electrode of Examples and Comparative Examples, the evaluation was performed using the following method, and the results are shown in Tables 1 and 2 below.
(1) Adhesive Strength (Peel): Each of the insulating compositions was coated to be 10 µm thick on an aluminum substrate, dried at 130 °C in an oven, and immersed in an electrolyte solution, and after 24 hours, whether or not an insulating layer was detached or not from the aluminum substrate was checked. The results were evaluated according to the following criteria. Herein, the electrolyte solution used above was the same as the electrolyte solution used in Example 1.
   ⊚ : detachment of 0 area%
   ○: detachment possibility of 0 to10 area%
   △ : detachment possibility of 10 to 20 area%
   X : detachment possibility of greater than or equal to 20 area%
(2) Swelling Rate: Each of the insulating compositions was coated to be 10 µm thick on an aluminum substrate, dried at 130 °C in an oven, and immersed in an electrolyte solution, and after 24 hours at room temperature, each insulating layer was measured with respect to a length change. The results were evaluated according to the following criteria. Herein, the electrolyte solution used above was the same as the electrolyte solution used in Example 1.
   ⊚ : swelling rate of 0 length%
   ∘ : swelling rate of 0 to 5 length%
   △ : swelling rate of 5 to 10 length%
   X : swelling rate of greater than or equal to 10 length%
(3) Curling: A sample was prepared by coating an insulating composition with a thickness of 20 µm on an aluminum substrate, drying the sample in an oven at 130 °C, and then punching the sample to 36 ϕ. A 2 cm X 2 cm cut was made in the center of the sample, and the center was measured using a ruler. The results were evaluated according to the following criteria.
   ⊚: curl height of less than or equal to 1 mm
   ○: curl height of 1 to 2 mm
   △: curl height of 2 to 3 mm
   X: curl height of greater than or equal to 3 mm

### Evaluation Example 3: Evaluation of Rechargeable Lithium Battery Cell

For each rechargeable lithium battery cell of Examples and Comparative Examples, the evaluation was performed using the following method, and the results are shown in Tables 1 and below2.

Cycle-life characteristics were evaluated by calculating a ratio of 500^{th} cycle discharge capacity to 1^{st} cycle discharge capacity after 500 cycles charging and discharging coin cells at 0.5 C within a voltage range of 3.0 to 4.25 V at 25 °C.
⊚ : cycle-life characteristics of greater than or equal to 90%
∘ : cycle-life characteristics of 80 to 90%
△ : cycle-life characteristics of 60 to 80%
X : cycle-life characteristics of less than or equal to 60%

**Table 1:**

| (unit: parts by weight) | | | | | |
|---|---|---|---|---|---|
| | | Example 1 | Example 2 | Example 3 | Example 4 |
| Copolymerization weight ratio | VDF | 99.5 | 99 | 95 | 90 |
| | AA | 0.5 | 1 | 5 | 10 |
| Composition characteristics | Particle size | ⊚ | ⊚ | ⊚ | ⊚ |
| | Viscosity | ⊚ | ⊚ | ⊚ | ⊚ |
| | Processability | ⊚ | ⊚ | ⊚ | ⊚ |
| Mechanical properties | Adhesive strength | ⊚ | ⊚ | ⊚ | ⊚ |
| | Swelling rate | ⊚ | ⊚ | ⊚ | ○ |
| | Curling | ⊚ | ⊚ | ○ | ○ |
| Battery cell characteristics | Cycle-life | ⊚ | ⊚ | ⊚ | ○ |

**Table 2:**

| (unit: parts by weight) | | | |
|---|---|---|---|
| | | Comparative Example1 | Comparative Example2 |
| PVdF | | 100 | 0 |
| SBR | | 0 | 100 |
| Composition characteristics | Particle size | ⊚ | ⊚ |
| | Viscosity | ⊚ | △ |
| | Processability | ⊚ | △ |
| Mechanical properties | Adhesive strength | △ | ⊚ |
| | Swelling rate | ○ | ⊚ |
| | Curling | △ | ⊚ |
| Battery cell characteristics | Cycle-life | △ | ○ |

The insulating compositions for a rechargeable lithium battery, which were represented by Examples 1 to 7, used 'a copolymer of a vinylidene fluoride-based monomer and at least one comonomer' as the non-aqueous binder, compared to the case of using the 'polyvinylidene fluoride' itself, were confirmed to improve coating processability by reducing or suppressing a sharp drop in slurry viscosity, and also improve physical properties by increasing adhesive strength of a finally manufactured electrode, reducing a swelling rate, reducing or suppressing a curling shape, and the like.

Accordingly, an electrode and a rechargeable lithium battery manufactured using the insulating composition for the rechargeable lithium battery according to the aforementioned example embodiments may exhibit desired or improved cycle-life characteristics.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the spirit and scope of the appended claims.

### Description of Symbols:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. An insulating composition for a rechargeable lithium battery, the insulation composition comprising:
a non-aqueous binder;
inorganic particles; and
a solvent,
wherein the non-aqueous binder comprises:
a copolymer of a vinylidene fluoride-based monomer; and
at least one comonomer different from the vinylidene fluoride-based monomer.

2. The insulating composition as claimed in claim 1, wherein the vinylidene fluoride-based monomer is represented by Chemical Formula 1: 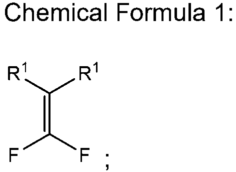 wherein, in Chemical Formula 1,
R' is the same or different and comprises H, or a substituted or unsubstituted C1 to C30 alkyl group.

3. The insulating composition as claimed in claim 1, wherein the comonomer comprises a functional group represented by at least one of Chemical Formula 2, and a combination thereof:
Chemical Formula 2: *-L¹-COOH;
wherein, in Chemical Formula 2,
L¹ comprises a single bond, or a substituted or unsubstituted C1 to C10 alkylene.

4. The insulating composition as claimed in any of the claims 1 to 3, wherein the copolymer comprises at least one of poly(vinylidene fluoride-co-carboxylic acid) (P(VDF-co-CA)), poly(vinylidene fluoride-co-acrylic acid(P(VDF-co-AA), and a combination thereof.

5. The insulating composition as claimed in any of the claims 1 to 4, wherein the copolymer is a copolymer in which the vinylidene fluoride monomer and the comonomer are copolymerized in a weight ratio in a range of ≥ 80:20 to ≤ 99.9:0.1.

6. The insulating composition as claimed in any of the claims 1 to 5, wherein a weight average molecular weight of the copolymer measured by the GPC method is in a range of ≥ 1,000,000 g/mol to ≤ 1,600,000 g/mol and/or wherein a Z-average particle diameter of the copolymer is in a range of ≥ 100 µm to ≤ 400 µm.

7. The insulating composition as claimed in any of the claims 1 to 6, wherein the inorganic particles comprise at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof.

8. The insulating composition as claimed in any of the claims 1 to 7, wherein the solvent comprises at least one of NMP, NEP, DMAc, DMF, and a combination thereof.

9. The insulating composition as claimed in any of the claims 1 to 8, wherein based on 100 wt% of a total amount of the insulating composition,
the insulating composition comprises:
4 wt% to ≤ 10 wt% of the copolymer;
5 wt% to ≤ 20 wt% of the inorganic particles; and
60 wt% to ≤ 90 wt% of the solvent.

10. The insulating composition as claimed in any of the claims 1 to 8, wherein:
the insulating composition further comprises an additive, and
the additive comprises a dispersant.

11. The insulating composition as claimed in any of the claims 1 to 10, wherein the insulating composition has a viscosity in a range of ≥ 500 mPa·s to ≤ 2,500 mPa·s at a shear rate of ≥ 10 s⁻¹ at a temperature of ≥ 25 °C and/ or wherein the insulating composition has a Thixotropy Index (T.I) value in a range of ≥ 0.1 to ≤ 0.6.

12. An electrode (10, 20) for a rechargeable lithium battery comprising the insulating composition of any of the claims 1 to 11, the electrode comprising:
an electrode active material layer;
an electrode current collector comprising a coated region where the electrode active material layer is disposed, and an uncoated region where the electrode active material layer is not disposed; and
an insulating layer configured to coat at least a portion of the uncoated region,
wherein the insulating layer comprises:
a non-aqueous binder; and
inorganic particles,
the non-aqueous binder comprises a copolymer of:
a polyvinylidene fluoride-based monomer, and
at least one comonomer different from the vinylidene fluoride-based monomer.

13. The electrode as claimed in claim 12, wherein a crosslinking density is ≥ 10% and/or based on a total area 100 area% of the insulating layer, an area from which the insulating layer is detached after 24 hours of immersing the electrode in the electrolyte solution is ≤ 10 area% and/or based on a total length 100 length% of the insulating layer, after immersing the electrode in the electrolyte solution and at room temperature for 24 hours, a change in length of the insulating layer is ≤ 5 length%.

14. The electrode as claimed in claim 12 or 13, wherein a maximum thickness of the insulating part is in a range of ≥ 8 µm to ≤ 40 µm.

15. A rechargeable lithium battery (100), comprising:
a positive electrode (10);
a negative electrode (20)
a separator (30) between the positive electrode (10) and the negative electrode (20); and
an electrolyte solution,
wherein at least one of the positive electrode (10) and the negative electrode (20) comprises the electrode as claimed in claim 12.
